# EUROPÄISCHE PATENTSCHRIFT

(11) **EP 2 502 765 B1**
(45) Veröffentlichungstag und Bekanntmachung des Hinweises auf die Patenterteilung: **16.05.2018**
(21) Anmeldenummer: 12001496.4
(22) Anmeldetag: 06.03.2012
(51) Int. Cl.: B60G 13/00, F16F 9/32

(54) **Teleskop-Stossdämpfer**
Telescopic shock absorber
Amortisseur télescopique

(30) Priorität: 25.03.2011 DE 102011015021
(43) Veröffentlichungstag der Anmeldung: 26.09.2012
(73) Patentinhaber: Audi AG, 85045 Ingolstadt (DE)
(72) Erfinder: Stingl, Hanno, 85110 Kipfenberg (DE)
(74) Vertreter: Bauer, Dominik Michael

(56) Entgegenhaltungen:
- DE-U- 1 748 843
- FR-A1- 2 473 961
- JP-A- H09 210 115

## Beschreibung

Die Erfindung betrifft eine Anordnung eines Teleskop-Stoßdämpfer, insbesondere für Radaufhängungen von Kraftfahrzeugen, gemäß dem Oberbegriff des Patentanspruchs 1. Eine derartige Anordnung ist aus der JP H09 210115 A bekannt. Bei in Radaufhängungen von Kraftfahrzeugen eingesetzten Teleskop-Stoßdämpfern oder auch Federbeinen ist es bekannt, das Dämpferrohr über eine Klemmverbindung mit Funktionsbauteilen, zum Beispiel ein gabelförmiges Anschlussstück oder unmittelbar einem Radträger, fest zu verbinden. Die dabei aufgebrachten Klemmkräfte dürfen allerdings keine Verformung des Dämpferrohres bewirken, um die Funktion des Stoßdämpfers nicht zu beeinträchtigen.

So ist es zum Beispiel durch die FR 24 73 961 bekannt, bei einem Federbein mit einem Dämpferrohr aus faserverstärktem Kunststoff eine relativ lange Klemmverbindung vorzusehen und in deren unteren Bereich ein abschließendes, becherförmiges Verstärkungsteil aus Metall einzusetzen. Die Festigkeit der Verbindung wird hier hauptsächlich durch die große Einspannlänge erzielt, die aber aus Bauraum- und Gewichtsgründen nicht ohne weiteres einsetzbar ist.

Ausgabe der Erfindung ist es, ausgehend von einer herkömmlichen Stoßdämpfer-Konstruktion mit einem metallischen Dämpferrohr eine Klemmverbindung vorzuschlagen, die fertigungstechnisch günstig ist und die bei baulich gedrängter Ausführung eine hohe Festigkeit sicherstellt.

Die Lösung dieser Aufgabe gelingt mit den Merkmalen des Patentanspruches 1. Vorteilhafte und besonders zweckmäßige Weiterbildungen der Erfindung sind in den Unteransprüchen angeführt.

Erfindungsgemäß wird vorgeschlagen, dass im Bereich der Klemmverbindung an das Dämpferrohr unmittelbar ein Bodenabschnitt angeformt ist und dass oberhalb des Bodenabschnittes axial beabstandet ein, quasi einem zweiten Boden entsprechendes, bevorzugt metallisches Verstärkungsteil in das Dämpferrohr eingesetzt ist. Der unmittelbar zum Beispiel durch Warmumformen fertigungstechnisch günstig hergestellte Bodenabschnitt des Dämpferrohres und der zweite Boden bilden zwei die Klemmkräfte zuverlässig abstützende Lastpfade, die eine feste Klemmverbindung ohne Verformung des Dämpferrohres ergeben. Vorteilhaft ist zudem, dass die Klemmverbindung konstruktiv einfach und gewichtsgünstig ist und dass das Dämpferrohr in der Baulänge und im Befüllungsvolumen im Wesentlichen unverändert bleibt.

Das Verstärkungsteil erstreckt sich bevorzugt wenigstens über einen Teilbereich, höchst bevorzugt jedoch über im Wesentlichen den gesamgten Bereich der Klemmverbindung, um eine stabile Aussteifung desselben zu erzielen.

Erfindungsgemäß setzt sich das Verstärkungsteil aus einer sich unmittelbar an der Dämpferrohrinnenwand abstützenden und dort anliegenden Büchse mit einer aussteifenden Stützscheibe als Boden zusammen. Daraus resultiert eine fertigungstechnisch günstige Konstruktion mit einer gleichmäßigen Spannungsverteilung und Abstützung der Klemmkräfte im gesamten Endbereich des Dämpferrohres.

Dabei kann in besonders zweckmäßiger Weise die Stützscheibe des Verstärkungsteils in einem definierten Abstand zum Bodenabschnitt des Dämpferrohres angeordnet werden, wodurch eine besonders stabile, fachwerkartige Abstützung erreicht wird, die die Aufteilung der klemmkräfte auf unterschiedliche Lastpfade ermöglicht, nämlich auf wandseitige und verstärkungsteilseitige Lastpfade. Weiter kann die Stützscheibe in Längserstreckungsrichtung gesehen in etwa mittig in der Büchse angeordnet sein. Dadurch ergibt sich in Längsrichtung gesehen auf gegenüberliegenden Seiten der Stützscheibe in etwa gleiche Abstützverhältnisse. Ferner kann die Büchse des Verstärkungsteils mit Kraftspitzen abbauenden, verrundeten, aussteifenden Übergängen in die Stützscheibe übergehen.

Des Weiteren kann das Dämpferrohr im Bereich der Klemmverbindung bei gleicher Wandstärke mit einem geringfügig kleineren Durchmesser hergestellt sein, wobei das Verstärkungsteil in diesen Abschnitt kleineren Durchmessers eingepresst ist. Dies erhöht zusätzlich die Festigkeit des Dämpferrohres im Bereich der Klemmverbindung und vereinfacht zudem die Montage des Verstärkungsteils in das Dämpferrohr.

Die Stützscheibe des Verstärkungsteils kann ferner mit zumindest einem Durchbruch zur vereinfachten, zumindest teilweisen Befüllung des Stoßdämpfers durch den Bodenabschnitt des Dämpferrohres hindurch mit einem geeigneten Fluid versehen sein.

Schließlich kann die Büchse des Verstärkungsteils in ihrer Länge so ausgeführt sein, dass sie zugleich als Axialanschlag für einen im Dämpferrohr verschiebbar geführten Trennkolben dient.

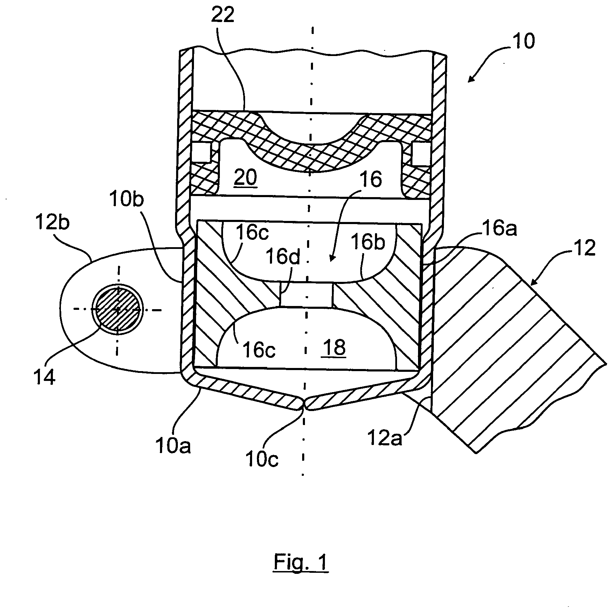

Ein Ausführungsbeispiel der Erfindung ist im Folgenden anhand der beiliegenden Zeichnung näher erläutert, die im Längsschnitt den unteren Abschnitt eines über eine Klemmverbindung an einem Funktionsbauteil befestigten Dämpferrohres eines Teleskop-Stoßdämpfers zeigt.

In der Zeichnung ist der untere Abschnitt eines Dämpfungsrohres 10 eines Teleskop-Stoßdämpfers für Radaufhängungen von Kraftfahrzeugen dargestellt, der soweit nicht beschrieben und gezeichnet üblicher Bauart sein kann.

Das Dämpfungsrohr 10 aus einem dünnwandigen Metallrohr gleicher Wandstärke ist nach unten mit einem durch spanloses Warmumformen angeformten, leicht sphärisch ausgebildeten Bodenabschnitt 10a geschlossen.

Ferner ist das Dämpfungsrohr 10 in einem unteren Bereich seiner Länge mit einem im Durchmesser geringfügig kleineren Abschnitt 10b ausgeführt und in eine Bohrung 12a eines nur angedeuteten Funktionsteils 12 (zum Beispiel einer Dämpfergabel) des Teleskop-Stoßdämpfers formschlüssig eingesteckt und mittels einer Klemmverbindung darin befestigt.

Dazu ist das Funktionsteil 12 wie eine umfangsoffene Klemmschelle mit einem vertikalen Schlitz definierter Breite und radial abstehenden Klemmbaken 12b ausgeführt, durch die sich wenigstens eine Klemmschraube 14 erstreckt, mittels der die die Klemmverbindung herstellende Klemmkraft durch Anziehen der Schraube 14 erzeugt wird. Die Länge der Klemmverbindung entspricht, wie aus der Zeichnung ersichtlich ist, etwa der Länge des im Durchmesser geringeren Abschnitts 10b des Dämpferrohres 10, wobei der Bodenabschnitt 10a etwa am unteren Ende der Klemmverbindung bzw. der Bohrung 12a positioniert ist.

Zur zusätzlichen Abstützung der durch die Klemmverbindung aufgebrachten Umfangskräfte ist in das Dämpferrohr 10 bzw. in dessen Abschnitt 10b ein metallisches Verstärkungsteil 16 hoher Festigkeit (Duktilität) eingesetzt bzw. eingepresst, das sich aus einer Büchse 16a und einer etwa mittig dazu angeformten Stützscheibe 16b zusammensetzt.

Die Stützscheibe 16b weist deutlich verrundete Übergänge 16c zur Büchse 16a auf, um die Steifigkeit des Verstärkungsteils 16 zu erhöhen.

Ferner ist in der Stützscheibe 16b ein zentrischer Durchbruch in Form einer Bohrung 16d vorgesehen, die die Kammer 18 zwischen dem Bodenabschnitt 10a und dem Verstärkungsteil 16 mit der darüber liegenden Kammer 20 des Dämpferrohrs 10 verbindet, die wiederum mittels eines verschiebbar im Dämpferrohr 10 geführten Trennkolbens 22 abgeteilt ist.

Der Trennkolben 22 erfüllt in bekannter Weise eine Ausgleichsfunktion für das im Dämpferrohr 10 des Stoßdämpfers befindliche Hydraulikmedium (die Funktionsteile Ventilkolben, Kolbenstange und obere Kolbenstangenführung des Stoßdämpfers sind hier aus Gründen der Übersichtlichkeit nicht dargestellt).

Die Befüllung der unterhalb des Trennkolbens 22 liegenden Kammern 18, 20 mit einem geeigneten Fluid erfolgt durch eine nach der Befüllung durch zum Beispiel Umbiegung verschließbare Öffnung 10c in dem Bodenabschnitt 10a des Dämpferrohrs 10 und durch den Durchbruch 16d in dem Verstärkungsteil 16 hindurch.

Das metallische Verstärkungsteil 16 kann bevorzugt ein Schmiedeteil, ein Gussteil oder ein Sintermetallteil sein, dessen Außenumfang mit geringer, maßlicher Überdeckung zum Innenumfang des Abschnittes 10b des Dämpferrohres 10 hergestellt ist. Die Länge der äußeren Büchse 16a ist zudem bevorzugt derart ausgeführt, dass deren obere, stirnseitige Ringfläche einen Axialanschlag für den Trennkolben 22 bilden kann.

Des Weiteren weist die Büchse 16a des Verstärkungsteils 16 bevorzugt eine derartige Länge auf, dass sie den gesamten, im Durchmesser geringeren Abschnitt 10b des Dämpferrohres 10 verstärkt und sich zudem am unteren Bodenabschnitt 10a abstützt. Die aussteifende Stützscheibe 16b ist dabei etwa mittig des Abschnitts 10b bzw. der Bohrung 12a des die Klemmverbindung ausübenden Funktionsteils 12 und mit der Klemmschraube 14 eine einheitliche Spannebene bildend positioniert.

## Patentansprüche

1. Anordnung eines Teleskop-Stoßdämpfer, insbesondere für Radaufhängungen von Kraftfahrzeugen, an einem Funktionsbauteil, wobei ein Dämpferrohr (10) des Teleskop-Stoßdämpfers an einem, einer Kolbenstange gegenüberliegenden Ende über eine Klemmverbindung (12) mit dem Funktionsbauteil fest verbunden ist, und wobei oberhalb eines Bodenabschnittes (10a) des Dämpferrohres (10) ein Verstärkungsbauteil (16), das eine sich an der Dämpferrohrinnenwand abstützende Büchse (16a) aufweist, in das Dämpferrohr (10) eingesetzt ist, **dadurch gekennzeichnet, dass** im Bereich der Klemmverbindung (12) an das Dämpferrohr (10) unmittelbar ein Bodenabschnitt (10a) angeformt ist und dass sich das Verstärkungsteil (16) aus der sich an der Dämpferrohrinnenwand abstützenden Büchse (16a) mit einer diese aussteifenden, mittigen Stützscheibe (16b) zusammensetzt.

2. Anordnung nach Anspruch 1, **dadurch gekennzeichnet, dass** sich das Verstärkungsteil (16) wenigstens über einen Teilbereich der Klemmverbindung (12) erstreckt.

3. Anordnung nach Anspruch 1 oder 2, **dadurch gekennzeichnet, dass** die Stützscheibe (16b) des Verstärkungsteils (16) in einem definierten Abstand zum Bodenabschnitt (10a) des Dämpferrohres (10) in der Büchse (10a) positioniert ist.

4. Anordnung nach einem der vorgehergehenden Ansprüche, **dadurch gekennzeichnet, dass** die Stützscheibe (16b) in Längserstreckungsrichtung der Büchse (16a) gesehen mittig in der Büchse (16a) angeordnet ist.

5. Anordnung nach einem der vorhergehenden Ansprüche, **dadurch gekennzeichnet, dass** die Büchse (16a) des Verstärkungsteils (16) mit verrundeten Übergängen (16c) in die Stützscheibe (16b) übergeht.

6. Anordnung nach einem der vorhergehenden Ansprüche, **dadurch gekennzeichnet, dass** das Dämpferrohr (10) im Bereich der Klemmverbindung (12) bei gleicher Wandstärke mit einem geringfügig kleineren Durchmesser hergestellt ist und dass das Verstärkungsteil (16) in diesen Abschnitt (10b) kleineren Durchmessers eingepresst ist.

7. Anordnung nach einem der vorhergehenden Ansprüche, **dadurch gekennzeichnet, dass** die Stützscheibe (16b) des Verstärkungsteils (16) mit zumindest einem Durchbruch (16d) zur zumindest teilweisen Befüllung des Stoßdämpfers durch den Bodenabschnitt (10a) des Dämpferrohres (10) hindurch versehen ist.

8. Anordnung nach einem der vorhergehenden Ansprüche, **dadurch gekennzeichnet, dass** die Büchse (16b) des Verstärkungsteils (16) in ihrer Länge so ausgeführt ist, dass sie zugleich als Axialanschlag für einen im Dämpferrohr (10) verschiebbar geführten Trennkolben (22) dient.

## Claims

1. Arrangement of a telescopic shock absorber, in particular for the wheel suspensions of motor vehicles, on a functional component, wherein a damper pipe (10) of the telescopic shock absorber is securely connected to the functional component at an end opposite a piston rod via a clamping connection (12), and wherein above a base section (10a) of the damper pipe (10) a reinforcement piece (16), which comprises a bushing (16a) supported on the damper pipe inner wall, is inserted into the damper pipe (10), **characterised in that** in the area of the clamping connection (12) a base section (10a) is formed directly on the damper pipe (10) and the reinforcement piece (16) is composed of the bushing (16a) supported on the damper pipe inner wall with a central support disc (16b) reinforcing the latter.

2. Arrangement according to claim 1, **characterised in that** the reinforcement piece (16) extends at least over a portion of the clamping connection (12).

3. Arrangement according to claim 1 or 2, **characterised in that** the support disc (16b) of the reinforcement piece (16) is positioned at a defined distance from the base section (10a) of the damper pipe (10) in the bushing (10a).

4. Arrangement according to any of the preceding claims, **characterised in that** the support disc (16b) is arranged approximately centrally in the bushing (16a), as viewed in the direction of the longitudinal extension of the bushing (16a).

5. Arrangement according to one or more of the preceding claims, **characterised in that** the bushing (16a) of the reinforcement piece (16) merges with rounded transitions (16c) with the support disc (16b).

6. Arrangement according to one or more of the preceding claims, **characterised in that** the damper pipe (10) is formed in the area of the clamping connection (12) having the same wall thickness with a slightly smaller diameter and **in that** the reinforcement piece (16) is pressed into said section (10b) having a smaller diameter.

7. Arrangement according to one or more of the preceding claims, **characterised in that** the support disc (16b) of the reinforcement piece (16) is provided with at least one opening (16d) for at least partly filling the shock absorber through the base section (10a) of the damper pipe (10).

8. Arrangement according to one or more of the preceding claims, **characterised in that** the bushing (16b) of the reinforcement piece (16) is designed to have such a length that it also functions as an axial stop for a separating piston (22) guided displaceably in the damper pipe (10).

## Revendications

1. Agencement d'un amortisseur télescopique, en particulier pour des suspensions de roues de véhicules automobiles, au niveau d'un composant fonctionnel,
dans lequel un tube d'amortisseur (10) de l'amortisseur télescopique est relié de manière fixe, par une extrémité opposée à une tige de piston et par l'intermédiaire d'un assemblage par serrage (12), au composant fonctionnel
et dans lequel, au-dessus d'une partie de base (10a) du tube d'amortisseur (10), un composant de renfort (16) qui comporte un fourreau (16a) s'appuyant à la paroi intérieure de tube d'amortisseur est placé dans le tube d'amortisseur (10),
**caractérisé en ce que**, dans la zone de l'assemblage par serrage (12), une partie de base (10a) est formée directement sur le tube d'amortisseur (10) et **en ce que** la partie de renfort (16) se compose du fourreau (16a), s'appuyant à la paroi intérieure de tube d'amortisseur, avec un disque de soutien central (16b) rigidifiant ledit fourreau.

2. Agencement selon la revendication 1, **caractérisé en ce que** la partie de renfort (16) s'étend au moins sur une zone partielle de l'assemblage par serrage (12).

3. Agencement selon la revendication 1 ou 2, **caractérisé en ce que** le disque de soutien (16b) de la partie de renfort (16) est positionné à une distance définie de la partie de base (10a) du tube d'amortisseur (10) dans le fourreau (10a).

4. Agencement selon l'une quelconque des revendications précédentes, **caractérisé en ce que** le disque de soutien (16b) est agencé, vu dans la direction d'extension longitudinale du fourreau (16a), au milieu dans le fourreau (16a).

5. Agencement selon l'une quelconque des revendications précédentes, **caractérisé en ce que** le fourreau (16a) de la partie de renfort (16) se transforme en disque de soutien (16b) avec des transitions arrondies (16c).

6. Agencement selon l'une quelconque des revendications précédentes, **caractérisé en ce que** le tube d'amortisseur (10) est fabriqué dans la zone de l'assemblage par serrage (12) avec une épaisseur de paroi identique et avec un diamètre légèrement plus petit et **en ce que** la partie de renfort (16) est enfoncée dans cette partie (10b) ayant un plus petit diamètre.

7. Agencement selon l'une quelconque des revendications précédentes, **caractérisé en ce que** le disque de soutien (16b) de la partie de renfort (16) est muni d'au moins une rupture (16d) en vue du remplissage au moins partiel de l'amortisseur via la partie de base (10a) du tube d'amortisseur (10).

8. Agencement selon l'une quelconque des revendications précédentes, **caractérisé en ce que** le fourreau (16b) de la partie de renfort (16) est réalisé avec une longueur telle qu'il sert en même temps de butée axiale pour un piston de séparation (22) guidé mobile en translation dans le tube d'amortisseur (10).
